# EUROPÄISCHE PATENTSCHRIFT

(11) **EP 0 347 705 B1**
(45) Veröffentlichungstag und Bekanntmachung des Hinweises auf die Patenterteilung: **07.01.1993**
(21) Anmeldenummer: 89110606.4
(22) Anmeldetag: 12.06.1989
(51) Int. Cl.: H02P 7/74, B25J 5/02

(54) **Antriebsanordnung für einen Portallaufwagen**
Drive device for a portal traveller
Appareil d'entraînement pour une chariot portique

(30) Priorität: 23.06.1988 DE 3821236
(43) Veröffentlichungstag der Anmeldung: 27.12.1989
(73) Patentinhaber: SIEMENS AKTIENGESELLSCHAFT, 80333 München (DE)
(72) Erfinder: Eberle, Manfred, D-8520 Erlangen (DE); Friemert, Horst, D-8520 Erlangen (DE)

(56) Entgegenhaltungen:
- EP-A- 0 124 738
- EP-A- 0 191 730
- EP-A- 0 218 878
- DE-A- 2 229 850
- PATENT ABSTRACTS OF JAPAN, Band 5, Nr. 149 (E-75)[821], 19. September 1981, Seite 145 E 75; & JP-A-56 83 285 (FUJITSU FANUC K.K.) 07-07-1981
- PATENT ABSTRACTS OF JAPAN, Band 6, Nr. 28 (E-95)[906], 19. Februar 1982, Seite 83 E 95; & JP-A-56 148 191 (HITACHI SEISAKUSHO K.K.) 17-11-1981

## Beschreibung

Die Erfindung bezieht sich auf eine Antriebsanordnung für einen Portallaufwagen, mit einer am Portal angeordneten Zahnstange und zugehörigem elektrischen Antrieb im Laufwagen.

Mit diesem Oberbegriff wird auf eine Anordnung Bezug genommen, wie sie beispielsweise in der deutschen Offenlegungsschrift 35 32 588 näher beschrieben ist. Hier ist auf dem Laufwagen ein Roboter angeordnet, der zu Bearbeitungs- und Montagezwecken verwendet wird. Im Zuge derartiger Verfahren tritt häufig die Forderung auf, z.B. weil die mitgeführte Last erhöht wird, die zur Verfügung stehende Antriebsleistung des Laufwagens zu vergrößeren. Dieses Problem ließe sich z.B. dadurch lösen, daß ein größerer elektrischer Antriebsmotor verwendet wird. Dies hat den Nachteil, daß dann auch unterschiedliche Speisegeräte zur Stromversorgung bereitgehalten werden müssen.

Die Aufgabe der vorliegenden Erfindung besteht darin, bei einer Antriebsanordnung der eingangs genannten Art auf einfache Weise dafür zu sorgen, daß die Antriebsleistung des Laufwagens erhöht wird. Diese Aufgabe wird erfindungsgemäß durch folgende Merkmale gelöst:
a) im Laufwagen sind mindestens zwei gleiche elektrische Antriebsmotoren angeordnet, die jeweils über ein gesondertes Zahnritzel in die Zahnstange eingreifen,
b) beide Antriebsmotoren sind mit gleichem Stromsollwert (Momentensollwert) angesteuert und
c) die Stromsollwerte sind aus einem Drehzahlregelkreis abgeleitet, der einem Motor zugeordnet ist.

Dem Drehzahlregelkreis kann dann noch ein weiterer Lageregelkreis überlagert sein.

Das Konzept der parallel angetriebenen elektrischen Motoren macht eine Leistungssteigerung ohne Übergang zu größeren Motortypen möglich. Außerdem hat die gewählte Konfiguration auch noch den Vorteil, daß die Zahnstange höher beanspruchbar ist, da sich die Leistung auf zwei Ritzel verteilt.

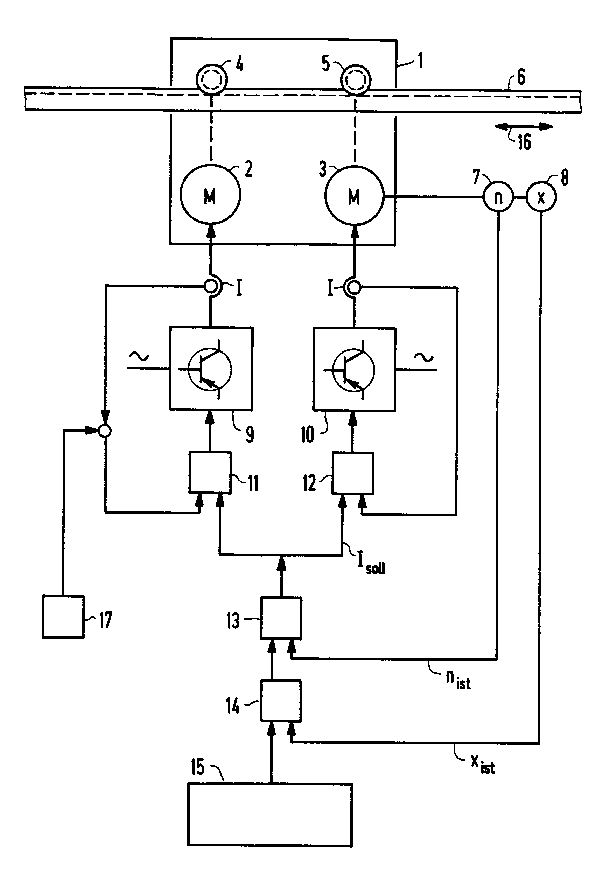

Anhand eines in der Zeichnung dargestellten Ausführungsbeispiels sei die Erfindung näher erläutert:
auf einem nicht näher dargestellten Portal soll ein Laufwagen 1 in Doppelpfeilrichtung 16 bewegbar sein. Hierzu sind im Laufwagen zwei elektrische Motoren 2 und 3 angeordnet, die jeweils über Ritzel 4 und 5 mechanisch in eine am Portal befestigte Zahnstange 6 eingreifen. Für jeden der Motoren 2 und 3 ist ein Transistorsteller 9 bzw. 10 vorgesehen. Die Transistorsteller 9, 10 werden von Stromreglern 11 und 12 angesteuert, die ihre Istwerte aus den Stromkreisen der Motoren 2 und 3 beziehen und ihren gemeinsamen Sollwert I_{Soll} aus einem Drehzahlregler 13. Dieser Drehzahlregler 13 erhält seinerseits seinen Istwert nᵢₛₜ aus einer mit dem Motor gekuppelten Tachometermaschine 7 oder einer nichtdargestellten Tachoersatzschaltung und seinen Sollwert von einem überlagerten Lageregler 14, der seinen Istwert Xᵢₛₜ von einem mit dem Motor 3 mechanisch gekuppelten Lageistwertgeber 8 erhält. Der Positionssollwert für den Laufwagen 1 wird von einer überlagerten Rechnersteuerung 15 geliefert, die aus betriebsspezifischen Daten die einzelnen Verfahrpositionen und Wege berechnet. Durch einen Geber 17 kann dann einem Motor 2 ein konstanter Motorstrom als Offset vorgegeben werden. Dadurch ergibt sich eine elektrisch einstellbare mechanische Verspannung der beiden Motorritzel in der Zahnstange 6. Hierdurch erreicht man eine exakte Positionierung des Laufwagens 1.

## Patentansprüche

1. Antriebsanordnung für einen Portallaufwagen (1) für Roboter, mit einer am Portal angeordneten Zahnstange (6) und zugehörigem elektrischen Antrieb im Laufwagen,
**gekennzeichnet durch** folgende Merkmale:
a) im Laufwagen (1) sind mindestens zwei gleiche elektrische Antriebsmotoren (2, 3) angeordnet, die jeweils über gesonderte Zahnritzel (4, 5) in die Zahnstange (6) eingreifen,
b) beide Antriebsmotoren (2, 3) sind mit gleichen Stromsollwerten (I_{Soll}) angesteuert und
c) die Stromsollwerte (I_{Soll}) sind aus einem Drehzahlregelkreis (13) abgeleitet, der nur einem Motor (3) zugeordnet ist.

2. Antriebsanordnung nach Anspruch 1 **gekennzeichnet durch** einen Lageregelkreis (14), der dem Drehzahlregelkreis (13) überlagert ist.

3. Antriebsanordnung nach Anspruch 1 **gekennzeichnet durch** einen Geber (17), der einen schaltbaren oder nicht schaltbaren Motorstrom - Offsetwert - auf den nicht geschwindigkeitsgeregelten Motor (2) gibt.

## Claims

1. Drive arrangement for a travelling gantry carriage (1) for a robot, having a gear rack (6) arranged on the gantry and an associated electrical drive in the travelling carriage,
characterised by the following features:
a) in the travelling carriage (1) there are arranged at least two identical electrical drive motors (2, 3) which respectively engage in the gear rack (6) by way of separate pinions (4, 5),
b) the two drive motors (2, 3) are controlled by means of the same current set points (Iₛₒₗₗ), and
c) the current set points (I_{Soll}) are derived from a speed control circuit (13) which is associated with only one motor (3).

2. Drive arrangement according to claim 1,
characterised by a position control circuit (14) which is superimposed on the speed control circuit.

3. Drive arrangement according to claim 1,
characterised by a transmitter (17) which transmits a switchable or non-switchable motor current - offset value - to the motor (2) without speed control.

## Revendications

1. Dispositif d'entraînement pour un chariot roulant formant portique (1) pour des robots, comportant une crémaillère (6) disposée sur le portique et un dispositif d'entraînement électrique associé disposé dans le chariot,
caractérisé par les particularités suivantes :
a) dans le chariot (1) sont disposés au moins deux moteurs électriques d'entraînement identiques (2,3), qui s'engagent respectivement et par l'intermédiaire de pignons particuliers (4,5) avec la crémaillère (6),
b) les deux moteurs d'entraînement (2,3) sont commandés par les mêmes valeurs de consigne de courant (I_{consigne}), et
c) les valeurs de consigne du courant (I_{consigne}) sont tirées d'un circuit (13) de régulation de la vitesse de rotation, qui est associée à un seul moteur (3).

2. Dispositif d'entraînement suivant la revendication 1, caractérisé par un circuit de régulation de position (14) qui est superposé au circuit (13) de régulation de la vitesse de rotation.

3. Dispositif d'entraînement suivant la revendication 1, caractérisé par un transmetteur (17) qui envoie un courant commutable ou non commutable -valeur d'offset- au moteur (2) dont la vitesse n'est pas réglée.
